# EUROPÄISCHE PATENTSCHRIFT

(11) **EP 0 590 657 B1**
(45) Veröffentlichungstag und Bekanntmachung des Hinweises auf die Patenterteilung: **22.05.1996**
(21) Anmeldenummer: 93115767.1
(22) Anmeldetag: 30.09.1993
(51) Int. Cl.: H01T 13/04, H01T 13/06

(54) **Zündkerzenstecker**
Spark plug connector
Connecteur de bougie d'allumage

(30) Priorität: 02.10.1992 DE 9213299 U; 05.05.1993 DE 9306765 U
(43) Veröffentlichungstag der Anmeldung: 06.04.1994
(73) Patentinhaber: DODUCO GMBH + Co Dr. Eugen Dürrwächter, D-75181 Pforzheim (DE); MERCEDES-BENZ AG, D-70327 Stuttgart (DE)
(72) Erfinder: Bahm, Klaus, D-76703 Kraichtal 4 (DE); Behnke, Horst, D-73733 Esslingen (DE)
(74) Vertreter: Twelmeier, Ulrich, Dipl.Phys.

(56) Entgegenhaltungen:
- EP-A- 0 388 024
- US-A- 5 026 294

## Beschreibung

Die Erfindung geht aus von einem Zündkerzenstecker mit den im Oberbegriff des Anspruchs 1 angegebenen Merkmalen. Solche Zündkerzenstecker sind durch Benützung bekannt. Sie haben ein starres, im Querschnitt kreisrundes Gehäuse aus einem duroplastischen Kunststoff, in welchem vorne eine elektrische Kontaktbuchse steckt, mit welcher der Zündkerzenstecker auf eine Zündkerze gesteckt wird. Um die Hochspannungsfestigkeit der Zündkerze zu gewährleisten, ist bei dem bekannten Zündkerzenstecker das Gehäuse auf nahezu seiner gesamten Länge von einer gummielastischen Hülse umschlossen, welche auf das Gehäuse aufgeklebt oder aufvulkanisiert ist und mit einem vorderen Abschnitt über das vordere Ende des Gehäuses übersteht; dieser vordere Abschnitt der Hülse erweitert sich zur Spitze hin kelchartig, um das Einführen der Zündkerze zu erleichtern, und umschließt den Isolator der Zündkerze dicht, wenn der Stecker bis zum Anschlag auf die Zündkerze aufgeschoben ist. Die für das Erzeugen von Zündfunken erforderliche Hochspannung wird durch ein Zündkabel zugeführt, welches von hinten her in einen im Gehäuse längsverlaufenden Kanal eingeführt wird und in elektrisch leitender Verbindung mit der Kontaktbuchse steht.

Zündkerzenstecker mit den Merkmalen des Oberbegriffs des Anspruchs 1 sind ferner aus der EP-0 388 024 A1 und aus der US-5,026,294 bekannt. In beiden Fällen hat der Zündkerzenstecker ein aus Hartkunststoff gebildetes Gehäuse, auf welchem sich im vorderen Ende eine überstehende elastomere Hülse befindet. Im Falle der US-5,026,294 befindet sich diese Hülse in einem Preßsitz auf dem harten Gehäuse.

Der vorliegenden Erfindung liegt die Aufgabe zugrunde, die Herstellung eines Zündkerzensteckers durch einen geänderten Aufbau des Zündkerzensteckers zu vereinfachen, ohne seine Handhabung unter den beengten Verhältnissen im Motorraum eines Automobils zu beeinträchtigen.

Diese Aufgabe wird gelöst durch einen Zündkerzenstecker mit den im Anspruch 1 angegebenen Merkmalen. Vorteilhafte Weiterbildungen der Erfindung sind Gegenstand der abhängigen Ansprüche.

Anders als beim Stand der Technik ist erfindungsgemäss die Hülse mit dem Gehäuse weder verklebt noch aufvulkanisiert, sondern lediglich unter elastischer Aufweitung auf die Hülse aufgeschoben. Unter der Wirkung ihrer Gummielastizität sitzt sie straff auf dem Gehäuse, ohne dass es dazu einer Klemmhülse bedürfte, und verschiebt sich darauf nicht, wenn der Stecker auf eine Zündkerze aufgesteckt oder von ihr abgezogen wird. Dabei ist die Dichtwirkung gegenüber eindringender Feuchtigkeit durch die straff aufsitzende Hülse so gut, dass das Gehäuse keineswegs auf voller Länge umhüllt werden muss, vielmehr kann man einen beträchtlich langen hinteren Abschnitt des Gehäuses von der Hülse unbedeckt lassen, vorzugsweise 50 bis 60 % der Länge des Gehäuses. Angesichts der Tatsache, dass bei modernen Motoren die Gehäuse der Kerzenstecker typisch 10 bis 12 cm lang sind, bringt das eine beträchtliche Einsparung an elastomerem Material und gibt einem beim Aufstecken und Abziehen eines Kerzensteckers am hinteren Ende des Kerzensteckers, wo man anfaßt, radialen Bewegungsspielraum, der die Handhabung erleichtert, ohne die Zentrierung des Zündkerzensteckers in einer Ausnehmung des Motorblocks, in welcher die Zündkerze angeordnet ist, zu beeinträchtigen, weil der Zündkerzenstecker in seinem vorderen Bereich, mit welchem er die Zündkerze finden muss, von der Hülse umgeben und deshalb dort dicker ist als im hinteren Bereich. Um eine gute Führung des Zündkerzensteckers in der Ausnehmung des Motorblocks mit möglichst sparsamem Materialeinsatz zu erreichen, ist die Hülse vorzugsweise mit einem Kranz von längsverlaufenden Rippen versehen, welche die Führungsaufgabe übernehmen können. Der auf den Rippen gemessene Durchmesser der Hülse ist am hinteren Ende der Hülse vorzugsweise etwas größer als am vorderen Ende, so dass der Zündkerzenstecker, wenn die erhöhten Rippen der Wand in der Ausnehmung im Motorblock anliegen, am vorderen Ende noch immer geringfügig verschwenkt werden kann, um ihn leicht auf die Zündkerze aufschieben und mit seiner Kontaktbuchse auf das Anschlußkontaktstück der Zündkerze zentrieren zu können.

Ausserdem ist erfindungsgemäss vorgesehen, dass zwischen dem Gehäuse und der Hülse eine Formschlußverbindung besteht, wodurch die Hülse an einem Verdrehen gegenüber dem Gehäuse gehindert wird. Die Formschlußverbindung kann dadurch hergestellt werden, dass das Gehäuse mit radialen Vorsprüngen in dazu passende Ausnehmungen der Hülse eingreift. Besonders günstig ist es jedoch, wenn man von der bisherigen runden Querschnittsform abgeht und das Gehäuse wenigstens auf einem Teil seiner Länge mit einer im Querschnitt eckigen, insbesondere sechseckigen äusseren Umrandung und dementsprechend die Hülse auf einem Teil ihrer Länge mit einer im Querschnitt eckigen, insbesondere sechseckigen inneren Umrandung versieht. Das behindert nicht nur ein gegenseitiges Verdrehen der beiden Teile, sondern spart auch Material beim Gehäuse bei gleichzeitig erhöhter Stabilität. Weitere Vorteile des eckigen Querschnitts liegen darin, dass das Gehäuse, welches üblicherweise aus einem duroplastischen Kunststoff gegossen wird, leichter entformt und entgratet werden kann. Ausserdem erhält man ebene Aussenflächen, die sich leichter beschriften lassen als zylindrische Flächen. Schließlich liegt ein besonderer Vorteil des eckigen Querschnitts darin, dass Coronaentladungen, welche zwischen dem Zündkerzenstecker und dem Motorblock bzw. dessen Zylinderkopf auftreten, die Isolationswirkung des Steckergehäuses weit weniger beeinträchtigen als bei einem im Querschnitt runden Gehäuse, bei welchem sich die Coronaentladung an irgendeiner Stelle in das Steckergehäuse einfrißt und schließlich zu einem Isolationsverlust führt. Bei einem im Querschnitt eckigen Gehäuse brennt die Coronaentladung an der dem Motorblock nächstliegenden Gehäusekante, also an einer Stelle, wo die Gehäusewand am dicksten ist und ohnehin die beste Hochspannungsfestigkeit hat. An einer solchen Stelle frißt sich die Coronaentladung aber nicht beliebig tief ein, sondern nur so tief, bis eine andere Stelle dieser oder einer anderen Gehäusekante den kleinsten Abstand vom Motorblock hat und die Coronaentladung sich deshalb dorthin verlagert. Die Hochspannungsfestigkeit des eckigen Zündkerzensteckers ist deshalb bei gleichem Materialeinsatz besser und bleibt länger erhalten als bei einem Zündkerzenstecker mit rundem Gehäuse.

In vorteilhafter Weiterbildung der Erfindung nimmt der Aussendurchmesser des Gehäuses mit Annäherung an dessen vorderes Ende zu, wohingegen der Innendurchmesser der Hülse in dem Abschnitt, der das Gehäuse umschließen soll, nicht größer wird, sondern längs der Hülse gleich bleibt. Dadurch wird ein Abziehen der elastomeren Hülse vom Gehäuse erschwert, denn die Erweiterung am vorderen Ende des Gehäuses müsste sich infolge des axialen Zuges, der auftritt, wenn der Zündkerzenstecker von der Zündkerze abgezogen wird, durch den gleichbleibend engen Durchgang der Hülse hindurchzwängen, was vorzugsweise zusätzlich dadurch erschwert wird, dass man die Wandstärke der Hülse, beginnend am vorderen Ende des Gehäuses, nach hinten hin zunehmend dicker werden läßt, vorzugsweise in solchem Ausmaß, dass bei ordnungsgemäss auf dem Gehäuse positionierter Hülse der Aussendurchmesser der Hülse in dem Bereich, in dem sie das Gehäuse umschließt, längs des Gehäuses ungefähr konstant ist. Diese Maßnahme erschwert das Abziehen der Hülse vom Gehäuse, weil der erweiterte Teil des Gehäuses dabei eine zunehmend dickere Wand der Hülse dehnen müsste. Gleichzeitig wird dadurch das Aufschieben der Hülse auf das Gehäuse erleichtert, welches besonders leicht geht, wenn es mit Unterstützung durch Druckluft erfolgt, die in das Innere der Hülse eingeleitet wird.

Für die Form der Erweiterung im vorderen Abschnitt des Gehäuses hat sich ein 30 bis 35 mm hoher Pyramidenstumpf mit einem halben Öffnungswinkel von 5° besonders bewährt.

In Weiterbildung der Erfindung ist in der elastomeren Hülse vorzugsweise eine Schulter gebildet, welche an der vorderen Endfläche des Gehäuses anliegt; sie bildet ein wirksames Hindernis dagegen, dass das Gehäuse durch die elastomere Hülse hindurchgeschoben wird, wenn der Zündkerzenstecker auf eine Zündkerze aufgesteckt wird, und erlaubt gleichzeitig das Übertragen der dabei notwendigen Steckkraft, die sich daraus ergibt, dass der über das vordere Ende des Gehäuses vorstehende Abschnitt der elastomeren Hülse straff auf den Isolator der Zündkerze aufgeschoben werden soll, damit keine Feuchtigkeit eindringen kann, die die Hochspannungsfestigkeit beeinträchtigen würde. Wird der vordere Abschnitt der elastomeren Hülse straff auf den Isolator der Zündkerze aufgeschoben, staut sich zwangsläufig die Luft in diesem vorderen Abschnitt und erschwert das Aufstecken des Zündkerzensteckers. Umgekehrt entsteht beim Abziehen des Zündkerzensteckers in dem vorderen Abschnitt der elastomeren Hülse ein Unterdruck, der sich letztendlich in einem deutlich vernehmbaren "Plop" äussert; der Unterdruck erschwert das Abziehen des Zündkerzensteckers. In Weiterbildung der Erfindung begegnet man dem dadurch, dass ausgehend vom hinteren Ende des überstehenden Abschnitts der Hülse in deren innenliegende Oberfläche eine Rille eingeformt ist, welche sich weiter nach hinten hin erstreckt. Durch diese Rille kann der Raum zwischen Zündkerze und Kontaktbuchse be- und entlüftet werden, was das Aufstecken und Abziehen des Zündkerzensteckers spürbar erleichtert. Eine solche Rille kann nur verwirklicht werden, weil die Hülse auf dem Steckergehäuse nicht aufgeklebt oder aufvulkanisiert ist. Der lichte Querschnitt dieser Rille ist so zu wählen, dass er ein Eindringen von Feuchtigkeit nicht erlaubt. Die Rille ist deshalb höchsten 0,5 mm, vorzugsweise nur 0,1 bis 0,2 mm breit und höchstens so tief wie breit, vorzugsweise noch deutlich flacher als breit. Um das Eindringen von Feuchtigkeit weiterhin zu erschweren, verläuft die Rille vorzugsweise nicht auf dem kürzesten Wege zum hinteren Ende der Hülse, sondern auf einem wellenförmigen oder mäanderförmigen Weg. Als Werkstoff für die Hülse wählt man ergänzend zweckmässigerweise einen solchen, der hydrophob ist. Besonders geeignet ist ein Silikongummi, welches die Herstellung der Hülse durch Spritzgießen erlaubt.

Für die praktische Handhabung des Zündkerzensteckers ist eine Weiterbildung der Erfindung günstig, gemäss der am hinteren Ende des Gehäuses ein schirmartig oder linsenartig gestalteter Griff angeformt ist: Auf das vorzugsweise ballig geformte Ende dieses Griffs kann man bequem Druck ausüben, wenn der Stecker aufgesteckt wird, und beim Abziehen des Zündkerzensteckers kann man bequem mit zwei Fingern hinter diesen Griff fassen und kräftig ziehen. Aus diesem Griff kann das Zündkabel in Längsrichtung herausgeführt werden, es ist aber auch möglich, das Zündkabel seitlich herauszuführen, wenn man in dem Griff einen seitlichen Ausschnitt vorsieht, der in den längsverlaufenden Kanal für das Zündkabel mündet; dieser seitliche Ausschnitt hindert beim Aufstecken oder Abziehen des Zündkerzensteckers in keiner Weise.

Ein Ausführungsbeispiel der Erfindung ist in den beigefügten Zeichnungen dargestellt.
- Figur 1: zeigt einen erfindungsgemässen Zündkerzenstecker in der Seitenansicht,
- Figur 2: zeigt den Querschnitt A-A durch den Stecker aus Figur 1,
- Figur 3: zeigt den Querschnitt B-B durch den Stecker aus Figur 1,
- Figur 4: zeigt den Stecker im Längsschnitt unmittelbar vor dem Aufschieben auf eine Zündkerze,
- Figur 5: zeigt im Längsschnitt denselben Stecker, nachden er auf die Zündkerze aufgesteckt ist, und
- Figur 6: zeigt als Detail einen Längsschnitt durch die elastomere Hülse des Zündkerzensteckers.

Der Zündkerzenstecker besteht aus einem länglichen, stabförmigen, im Querschnitt sechseckigen Gehäuse 1 aus einem duroplastischen Kunststoff und aus einer elastomeren Hülse 2. In den Gehäusewerkstoff sind am vorderen Ende des Gehäuses eine Kontaktbuchse 3, daran anschließend ein Entstörwiderstand 4 und daran anschließend ein elektrisches Anschlußteil 5 für den Anschluß eines Zündkabels eingebettet. Das Anschlußteil 5 liegt am Ende eines axial verlaufenden Kanals 6, der nach hinten aus dem Gehäuse herausführt und zur Aufnahme eines Zündkabels dient. Am hinteren Ende des Gehäuses ist ein pilzartiger Griff 7 vorgesehen, der eine seitliche Ausnehmung 8 hat, die Verbindung hat mit dem Kanal 6, so dass ein Zündkabel auch zur Seite herausgeführt werden kann.

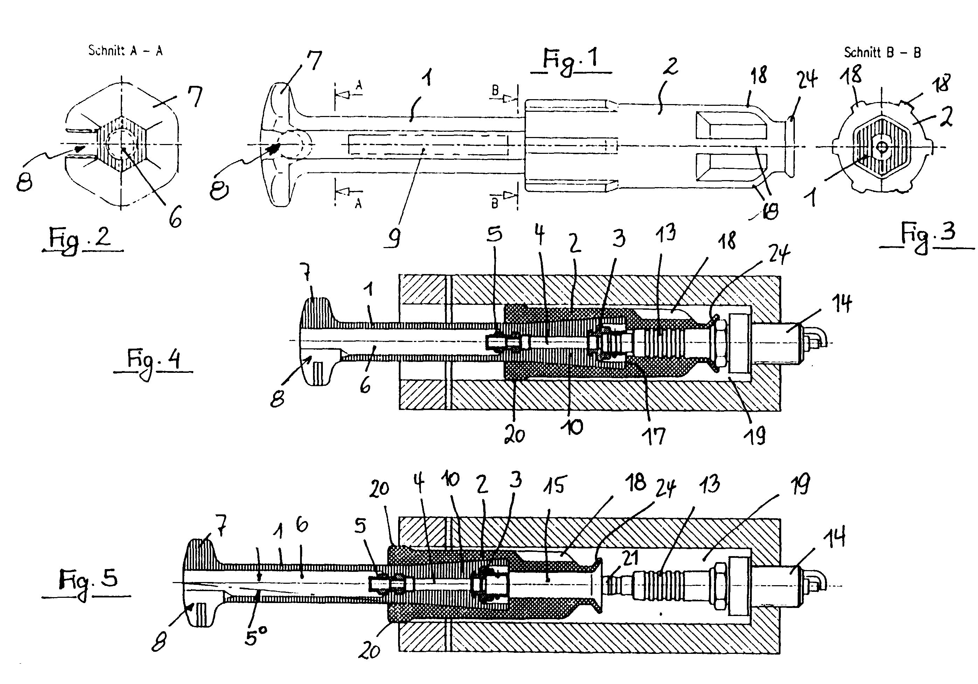

Die Hülse 2 umschließt nur etwa 40 % der Länge des Gehäuses 1, so dass auf den ebenen Aussenflächen des Gehäuses 1, soweit sie nicht von der Hülse 2 bedeckt sind, bequem eine Beschriftung angebracht werden kann, z.B. in dem in Figur 1 dargestellten Schriftfeld 9.

Während der äussere Umfang des Gehäuses 1 auf dem größten Teil seiner Länge gleichbleibend ist, erweitert sich das Gehäuse in der Nachbarschaft des vorderen Endes unter Ausbildung eines pyramidenstumpfartigen Abschnittes 10, dessen halber Öffnungswinkel 5° beträgt.

Die elastomere Hülse 2 unterteilt sich in einem hinteren Abschnitt 11, welcher das Gehäuse 1 umschließt, und einen über das Gehäuse vorstehenden Abschnitt 12, welcher dazu bestimmt ist, den Isolator 13 einer Zündkerze 14 aufzunehmen. Der Innendurchmesser des Abschnitts 12 ist deshalt so auf den genormten Aussendurchmesser des Isolators 13 abgestimmt, dass er straff auf dem Isolator sitzt und das Eindringen von Feuchtigkeit verhindert. An der Spitze der Hülse 2 befindet sich eine trichterförmige Erweiterung 24, welche das Einführen der Zündkerze 14 in die Hülse 2 erleichtert.

An den vorderen engen Kanal 15 der Hülse 2 schließt sich nach hinten ein im Durchmesser größerer Kanal 16 an. Während der vordere Kanal innen zylindrisch ist, ist der hintere Kanal 16 innen im Querschnitt sechseckig, entsprechend der sechseckigen Querschnittsgestalt des Gehäuses 1. Der über die Länge des Kanals 16 gleichbleibende lichte Querschnitt ist so bemessen, dass die Hülse 2 schon an ihrem hinteren Ende das Gehäuse 1 dicht umschließt, so dass der pyramidenstumpfförmige Abschnitt 10 des Gehäuses nur unter fortschreitender elastischer Aufweitung der Hülse 2 darin Platz findet. Zum Ausgleich für die von hinten nach vorne fortschreitende Aufweitung der Hülse 2 im Bereich des hinteren Kanals 16 ist deren Wanddicke dort ungleichmässig, sie nimmt von hinten nach vorne ab (Figur 6).

Statt den Innendurchmesser des Kanals 16 über die Länge gleich zu wählen, könnte man ihn auch entsprechend dem Öffnungswinkel des Pyramidenstumpfes 10 von hinten nach vorne anwachsen lassen und stattdessen den Aussendurchmesser der Hülse 2 über die Länge des hinteren Abschnitts 11 konstant halten. Das erleichtert das Aufschieben der Hülse 2 auf das Gehäuse 1.

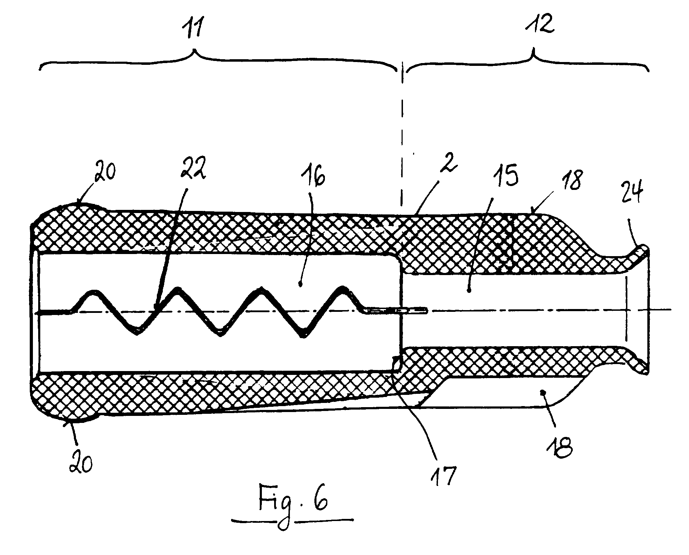

Entsprechend der Anzahl der sechs Innenflächen des Kanals 16 gibt es auf der Aussenseite der Hülse 3 einen Kranz von sechs längsverlaufenden Rippen 18, welche der Führung des Zündkerzensteckers in dem Kanal 19 eines Motorblocks dienen, an dessen Ende die Zündkerze 14 eingedreht ist. Die Höhe der Rippen 18 ist so bemessen, dass die Hülse 2, wie in den Figuren 4 und 5 dargestellt, ein geringes Spiel in dem Kanal 19 hat, ausgenommen am hinteren Ende der Hülse, wo die Rippen eine zusätzliche Erhöhung 20 aufweisen, infolge der sie beim Einführen des Zündkerzensteckers in den Kanal 19 an dessen Innenwand schleifen müssen. Diese Erhöhungen 20 bilden eine Art Schwenklager, um welches die trichterförmige Erweiterung 14 durch Auslenken des Griffs 7 geringfügig verschwenkt werden kann, um die Kontaktbuchse 3 korrekt auf den Anschlußkontakt 21 der Zündkerze aufstecken zu können.

Da der vordere Kanal 15 den Isolator 13 der Zündkerze dicht umschließt, bildet sich beim Aufstecken des Zündkerzensteckers im Kanal 15 ein Staudruck. Dieser kann entweichen durch eine in die innenliegende Oberfläche der Hülse eingeformte Rille 22, welche vom hinteren Ende des Kanals 15 ausgeht und unter Überwindung der Schulter 17 auf einem wellenlinienförmigen Weg bis zum hinteren Ende der Hülse führt. Der lichte Querschnitt der Rille 22 ist so eng gewählt, dass zwar Luft hindurch entweichen kann, aber keine Feuchtigkeit eindringen kann, insbesondere dann nicht, wenn die Hülse aus einem hydrophoben Material wie z.B. einem Silikongummi besteht.

## Patentansprüche

1. Zündkerzenstecker mit einem länglichen, starren Gehäuse (1) aus elektrisch isolierendem Werkstoff,
mit einer vorn im Gehäuse (1) befestigten Kontaktbuchse (3) zur elektrischen Kontaktgabe am Anschlußkontaktstück (21) einer Zündkerze (14),
mit einer das Gehäuse (1) nur auf einem Teil seiner Länge eng umschließenden elastomeren Hülse (2), welche über das vordere Ende des Gehäuses (1) mit einem Abschnitt (12) übersteht, welcher dazu dient, den Isolator (13) einer Zündkerze (14) dicht zu umschließen,
und mit einem im Gehäuse (1) längs verlaufenden Kanal (6) zum Einführen eines Zündkabels,
**dadurch gekennzeichnet**, dass die Hülse (2) auf das Gehäuse (1) unter elastischer Aufweitung lediglich aufgeschoben und durch eine Formschlußverbindung mit dem Gehäuse (1) gegen Verdrehen auf dem Gehäuse (1) gesichert ist.

2. Zündkerzenstecker nach Anspruch 1, **dadurch gekennzeichnet**, dass das Gehäuse (1) wenigstens auf einem Teil seiner Länge einen Querschnitt mit eckiger, insbesondere sechseckiger äusserer Umrandung und die Hülse (2) auf einem Teil ihrer Länge einen Querschnitt mit eckiger, insbesondere sechseckiger innerer Umrandung hat.

3. Zündkerzenstecker nach Anspruch 2, **dadurch gekennzeichnet**, dass der äussere Umfang des Gehäuses (1) mit Annäherung an dessen vorderes Ende zunimmt, wohingegen der innere Umfang der Hülse (2) in dem Abschnitt (11), der dazu bestimmt ist, das Gehäuse (1) zu umschließen, längs der Hülse (2) gleich bleibt.

4. Zündkerzenstecker nach Anspruch 3, **dadurch gekennzeichnet**, dass die Wanddicke der Hülse (2) in dem Abschnitt (11), der dazu bestimmt ist, das Gehäuse (1) zu umschließen, nach vorn hin abnimmt.

5. Zündkerzenstecker nach Anspruch 3, **dadurch gekennzeichnet**, dass der sich erweiternde Abschnitt des Gehäuses (1) ein Pyramidenstumpf (10) mit einem halben Öffnungswinkel von ca. 5° ist.

6. Zündkerzenstecker nach Anspruch 5, **dadurch gekennzeichnet**, dass der Pyramidenstumpf (10) 30 mm bis 35 mm hoch ist.

7. Zündkerzenstecker nach einem der vorstehenden Ansprüche, **dadurch gekennzeichnet**, dass in der Hülse (2) eine Schulter (17) gebildet ist, welche der vorderen Endfläche des Gehäuses (1) anliegt.

8. Zündkerzenstecker nach einem der vorstehenden Ansprüche, **dadurch gekennzeichnet**, dass in die innenliegende Oberfläche der Hülse (2) eine Rille (22) eingeformt ist, welche sich ausgehend vom hinteren Ende des überstehenden Abschnitts (12) der Hülse (2) nach hinten erstreckt.

9. Zündkerzenstecker nach Anspruch 7 und 8, **dadurch gekennzeichnet**, dass die Rille (22) die Schulter (17) überwindet.

10. Zündkerzenstecker nach Anspruch 8 oder 9, **dadurch gekennzeichnet**, dass sich die Rille (22) bis zum hinteren Ende der Hülse (2) erstreckt.

11. Zündkerzenstecker nach Anspruch 8, 9 oder 10, **dadurch gekennzeichnet**, dass die Rille (22) wellenförmig oder mäanderförmig verläuft.

12. Zündkerzenstecker nach einem der Ansprüche 8 bis 11, **dadurch gekennzeichnet**, dass die Rille (22) höchstens 0,5 mm, vorzugsweise nur 0,5 bis 0,2 mm breit ist.

13. Zündkerzenstecker nach Anspruch 12, **dadurch gekennzeichnet**, dass die Rille (22) höchstens so tief wie breit, vorzugsweise flacher ist.

14. Zündkerzenstecker nach einem der vorstehenden Ansprüche, **dadurch gekennzeichnet**, dass dem Gehäuse (1) am hinteren Ende ein schirm- oder linsenartig gestalteter Griff (7) angeformt ist.

15. Zündkerzenstecker nach Anspruch 14, **dadurch gekennzeichnet**, dass der Griff (7) einen seitlichen Ausschnitt (8) hat, der in den längs verlaufenden Kanal (6) mündet.

16. Zündkerzenstecker nach einem der vorstehenden Ansprüche, **dadurch gekennzeichnet**, dass die Hülse (2) das Gehäuse (1) auf weniger als der halben Länge des Gehäuses (1) umgibt, vorzugsweise nur auf 40 % seiner Länge.

17. Zündkerzenstecker nach einem der vorstehenden Ansprüche, **dadurch gekennzeichnet**, dass die Hülse (2) einen Kranz von längs verlaufenden Führungsrippen (18) auf ihrer Aussenseite hat.

18. Zündkerzenstecker nach Anspruch 17, **dadurch gekennzeichnet**, dass der auf den Rippen (18) gemessene Durchmesser der Hülse (2) im hinteren Bereich größer als im vorderen Bereich der Hülse (2) ist.

## Claims

1. Spark plug with an elongated, rigid housing (1) made of an electrical insulating material,
with a contact bush (3) fastened at the front in the housing (1) for making electrical contact with the connecting contractor (21) of a spark plug (14),
with an elastomer sleeve (2) closely surrounding the housing (1) only over one part of its length, which projects beyond the front end of the housing (1) by a section (12), which is used for closely surrounding the insulator (13) of a spark plug (14),
and with a channel (6) running lengthwise in the housing (1) for feeding in an ignition lead,
characterized in that the sleeve (2) is only pushed on to the housing (1) under elastic flaring and secured against twisting on the housing (1) by means of a positive connection to the housing (1).

2. Spark plug according to Claim 1, **characterized in that** the housing (1) has a cross-section, at least over a part of its length, with an angular, particularly hexagonal outer edging and the sleeve (2) has a cross-section with an angular, particularly hexagonal inner edging over a part of its length.

3. Spark plug according to Claim 2, **characterized in that** the external periphery of the housing (1) increases as it approaches the front end thereof, in contrast to which the internal periphery of the sleeve (2) in the section (11) which is intended to enclose the housing (1) remains the same along the sleeve (2).

4. Spark plug according to Claim 3, **characterized in that** the wall thickness of the sleeve (2) in the section (11) which is intended to enclose the housing (1) decreases towards the front.

5. Spark plug according to Claim 3, **characterized in that** the expanding section of the housing (1) is a pyramidal frustum (10) with a half angle of aperture of approx. 5°.

6. Spark plug according to Claim 5, **characterized in that** the pyramidal frustum (1) is 30 mm to 35 mm high.

7. Spark plug according to one of the preceding Claims, **characterized in that** in the sleeve (2) a shoulder (17) is formed, which lies against the front end surface of the housing (1).

8. Spark plug according to one of the preceding Claims, **characterized in that** in the inside surface of the sleeve (2) a groove (22) is formed, which extends from the rear end of the projecting section (12) of the sleeve (2) to the rear.

9. Spark plug according to Claims 7 and 8, **characterized in that** the groove (22) winds over the shoulder (17).

10. Spark plug according to Claim 8 or 9, **characterized in that** the groove (22) extends up t the rear end of the sleeve (2).

11. Spark plug according to Claim 8, 9 or 10, **characterized in that** the groove (11) runs in a wave or meandering form.

12. Spark plug according to one of Claims 8 to 11, **characterized in that** the groove (22) is at most 0.5 mm, preferably only 0.5 to 0.2 mm wide.

13. Spark plug according to Claim 12, **characterized in that** the groove (22) is at most as deep as it is wide, preferably flatter.

14. Spark plug according to one of the preceding Claims, **characterized in that** a handle (7) having the form of a shield or lens is moulded integral with the housing (1).

15. Spark plug according to Claim 14, **characterized in that** the handle (7) has a lateral cutout (8) which flows into the longitudinally running channel (6).

16. Spark plug according to one of the preceding Claims, **characterized in that** the sleeve (2) surrounds the housing (1) over less than half the length of the housing (1), preferably only over 40% of its length.

17. Spark plug according to one of the preceding Claims, **characterized in that** the sleeve (2) has a crown of longitudinally running guide ribs (18) on its outside.

18. Spark plug according to Claim 17, **characterized in that** the diameter of the sleeve (2) measured on the ribs (18) is greater in the rear area than in the front area of the sleeve (2).

## Revendications

1. Connecteur de bougie d'allumage comportant un boîtier rigide allongé (1) fabriqué en un matériau isolant électrique,
comprenant une douille de contact (3) fixée à l'avant du boîtier (1) pour assurer le contact électrique avec la pièce de contact de raccordement (21) d'une bougie d'allumage (14),
disposant d'une enveloppe en élastomère (2) enfermant de manière étroite le boîtier (1) sur une partie seulement de sa longueur, qui dépasse de l'extrémité du boîtier (1) d'une section (12) destinée à enfermer de manière étanche l'isolateur (13) d'une bougie d'allumage (14),
et présentant un canal (6) disposé le long du boîtier (1) pour l'introduction d'un câble d'allumage,
caractérisé en ce que l'enveloppe (2) est uniquement poussée sous déformation élastique sur le boîtier (1) et assurée contre la torsion par l'adaptation de sa forme avec celle du boîtier (1).

2. Connecteur de bougie d'allumage selon la revendication 1, caractérisé en ce que le boîtier (1), au moins sur une partie de sa longueur, présente une section de bordure extérieure anguleuse, en particulier à six pans, et que l'enveloppe (2), sur une partie de sa longueur, présente une section de bordure intérieure anguleuse, en particulier à six pans.

3. Connecteur de bougie d'allumage selon la revendication 2, caractérisé en ce que le périmètre extérieur du boîtier (1) augmente en s'approchant de son extrémité avant, alors qu'au contraire le périmètre intérieur de l'enveloppe (2) dans la section (11) définie pour enfermer le boîtier (1) reste le même le long de l'enveloppe (2).

4. Connecteur de bougie d'allumage selon la revendication 3, caractérisé en ce que l'épaisseur de paroi de l'enveloppe (2) dans la section (11) définie pour enfermer le boîtier (1), diminue en direction de l'avant.

5. Connecteur de bougie d'allumage selon la revendication 3, caractérisé en ce que la section s'élargissant du boîtier (1) est un tronc de pyramide (10) dont le demi-angle d'ouverture est d'environ 5°.

6. Connecteur de bougie d'allumage selon la revendication 5, caractérisé en ce que le tronc de pyramide (10) a une hauteur de 30 mm à 35 mm.

7. Connecteur de bougie d'allumage selon l'une quelconque des revendications précédentes, caractérisé en ce qu'un épaulement (17) est formé dans l'enveloppe (2), touchant la surface d'extrémité avant du boîtier (1).

8. Connecteur de bougie d'allumage selon l'une quelconque des revendications précédentes, caractérisé en ce que dans la surface intérieure de l'enveloppe (2) une rainure (22) est formée qui, partant de l'extrémité arrière de la section (12) située au-dessus, de l'enveloppe (2), s'étend vers l'arrière.

9. Connecteur de bougie d'allumage selon les revendications 7 et 8, caractérisé en ce que la rainure (22) dépasse l'épaulement (17).

10. Connecteur de bougie d'allumage selon la revendication 8 ou 9, caractérisé en ce que la rainure (22) s'étend jusqu'à l'extrémité arrière de l'enveloppe (2).

11. Connecteur de bougie d'allumage selon les revendications 8, 9 ou 10, caractérisé en ce que la rainure (22) est ondulée ou forme des méandres.

12. Connecteur de bougie d'allumage selon l'une quelconque des revendications 8 à 11, caractérisé en ce que la rainure (22) a une largeur maximale de 0,5 mm, de préférence n'est large que de 0,5 à 0,2 mm.

13. Connecteur de bougie d'allumage selon la revendication 12, caractérisé en ce que la rainure (22) est au maximum aussi profonde que large, de préférence plus plate.

14. Connecteur de bougie d'allumage selon l'une quelconque des revendications précédentes, caractérisé en ce qu'une poignée (7) en forme de parapluie ou de lentille est formée à l'extrémité arrière du boîtier (1).

15. Connecteur de bougie d'allumage selon la revendication 14, caractérisé en ce que la poignée (7) comporte un évidemment (8) latéral, qui débouche dans le canal (6) disposé dans la longueur.

16. Connecteur de bougie d'allumage selon l'une quelconque des revendications précédentes, caractérisé en ce que l'enveloppe (2) n'entoure le boîtier (1) que sur une distance inférieure à sa demi-longueur, de préférence sur moins de 40 % de sa longueur.

17. Connecteur de bougie d'allumage selon l'une quelconque des revendications précédentes, caractérisé en ce que l'enveloppe (2) présente sur sa face extérieure une couronne de nervures (18) de guidage disposées dans le sens de la longueur.

18. Connecteur de bougie d'allumage selon la revendication 17, caractérisé en ce que le diamètre de l'enveloppe (2) mesuré sur les nervures (18) est, dans la zone arrière, plus grand que dans la zone avant de l'enveloppe (2).
